# DEMANDE DE BREVET EUROPEEN

(11) **EP 4 535 161 A1**
(43) Date de publication de la demande: **09.04.2025**
(21) Numéro de dépôt: 24202984.1
(22) Date de dépôt: 26.09.2024
(51) Int. Cl.: G06F 7/533

(54) **PROCÉDÉ ET CIRCUIT ÉLECTRONIQUE DE MULTIPLICATION**

(30) Priorité: 02.10.2023 FR 2310518
(71) Demandeur: STMicroelectronics International N.V., 1228 Plan-les-Ouates, Geneva (CH)
(72) Inventeur: Romain, Fabrice M., 83560 Rians (FR)
(74) Mandataire: Casalonga

(57) **Abrégé**

Procédé de multiplication, comprenant une réception d'un multiplicande numérique (A), une réception d'un multiplicateur numérique initial (BI) comportant des 0 et des 1 logiques, un traitement (ST10) du multiplicateur initial comportant au début de chaque chaîne d'au moins un 1 logique du multiplicateur initial, une application ou non d'un encodage de Booth sur ladite chaîne de façon à délivrer un multiplicateur final, et une multiplication (ST20) du multiplicande par le multiplicateur final.

## Description

Des modes de mise en oeuvre et de réalisation concernent la multiplication d'opérandes dans un circuit électronique de multiplication, notamment pour effectuer des calculs cryptographiques, et plus particulièrement pour rendre plus difficiles des attaques par canaux auxiliaires (connus par l'homme du métier sous l'acronyme anglosaxon SCA : « Side Channel Attacks »).

Les calculs cryptographiques doivent maintenir la confidentialité du secret manipulé lors des opérations de multiplication.

A chaque cycle d'horloge le multiplicateur est multiplié avec le multiplicande. Cela génère des pics de consommation et des pics électromagnétiques dont la forme et l'amplitude peuvent trahir les valeurs du multiplicateur, du multiplicande et des contenus des registres d'accumulation.

Cela peut conduire à une extraction de la valeur du secret à l'aide d'attaques du type SCA.

Une protection de ces secrets contre les attaques de type SCA est difficile à réaliser
On peut effectuer un masquage arithmétique des données en utilisant un nombre aléatoire R.

Par exemple la multiplication A*B est masquée en effectuant les opérations suivantes A*(B+R) - A*R, qui donnent le même résultat que celui de la multiplication A*B.

Le masquage arithmétique est actuellement utilisé dans de nombreuses implémentations, et est le plus souvent géré au niveau logiciel.

Cependant le masquage des données augmente le nombre d'opérations ou les circuits matériels s'ils sont intégrés au matériel.

En outre de nouvelles techniques d'apprentissage automatique pourraient réussir l'attaque en utilisant une trace unique et vaincre les contre-mesures de masquage des données.

Il a été proposé dans le document US 2013/0262544 un dispositif de multiplication comportant un encodeur mettant en oeuvre un encodage de Booth du type Booth-2 modifié pour délivrer en sortie de l'encodeur soit un mot de code nul (« zero-generation Booth code ») soit un mot de code dont tous les bits sont à 1 (« zero-avoidance Booth code »), et ce uniquement lorsque les bits du mot multiplicateur sont nuls.

En conséquence l'encodage de Booth est appliqué sur tous les mots du multiplicateur avec un brouillage par un mot de code Booth modifié uniquement lorsque le mot du multiplicateur est nul.

Il en résulte donc une potentielle faiblesse vis-à-vis des attaques SCA car seule la valeur 0 est protégée.

Il existe donc un besoin de proposer une autre solution pour rendre plus robuste un circuit de multiplication vis-à-vis des attaques du type SCA.

Selon un aspect, il est proposé un procédé de multiplication, comprenant
- une réception d'un multiplicande numérique,
- une réception d'un multiplicateur numérique dit « initial » comportant des 0 et des 1 logiques,
- un traitement du multiplicateur comportant au début de chaque chaîne d'au moins un 1 logique du multiplicateur initial, une application ou non d'un encodage de Booth sur ladite chaîne, de façon à délivrer un multiplicateur dit « final », et
- une multiplication du multiplicande par le multiplicateur final.

Ainsi à chaque début de chaîne de 1 (une chaîne de 1 peut contenir un seul 1 ou plusieurs 1 consécutifs), il est décidé d'utiliser ou non l'encodage Booth.

En d'autres termes, contrairement au document US 2013/0262544 qui applique constamment l'encodage de Booth avec une modification de l'encodage dans le cas particulier d'un mot nul, le procédé selon cet aspect, prévoit de ne pas appliquer systématiquement un encodage de Booth mais à chaque fois qu'une chaîne de 1 est détectée, de décider de l'appliquer ou non sur cette chaîne de 1 détectée et bien entendu sur le 0 situé juste après cette chaîne de 1.

La multiplication se fait donc sans opération supplémentaire en utilisant uniquement un simple encodage d'opérande, ce qui est plus efficace que le masquage des données vis-à-vis des attaques SCA.

En outre cette solution ne nécessite pas de temps de calcul supplémentaire, et très peu de puissance supplémentaire (quelques %).

En outre, grâce à cette prise de décision d'un encodage Booth ou non, un opérande de 8 bits par exemple peut être codé en moyenne avec 16 valeurs différentes, ce qui rend l'identification d'un opérande beaucoup plus difficile lors d'une attaque SCA.

Bien que la décision d'effectuer ou non l'encodage Booth sur une chaîne de 1 puisse être prise en fonction de n'importe quel critère, il est particulièrement avantageux que cette décision soit prise aléatoirement, ce qui rend encore plus difficile l'identification des opérandes.

Ainsi selon un mode de mise en oeuvre, le procédé comprend en outre une réception d'une donnée numérique pseudo aléatoire. L'application ou non d'un encodage de Booth sur ladite chaîne dépend de la valeur logique du bit de ladite donnée pseudo aléatoire coïncidant avec le début de ladite chaîne.

L'encodage de Booth peut être par exemple l'encodage Booth-1 ou l'encodage Booth-2.

Selon un autre aspect il est proposé un circuit électronique de multiplication, par exemple un circuit intégré, comprenant
- une première entrée pour recevoir un multiplicande numérique,
- une deuxième entrée pour recevoir un multiplicateur numérique initial comportant des 0 et des 1 logiques,
- un premier étage configuré pour recevoir le multiplicateur numérique initial, et pour au début de chaque chaîne d'au moins un 1 logique du multiplicateur, appliquer ou non un encodage de Booth sur ladite chaîne et délivrer un multiplicateur final, et
- un étage de multiplication configuré pour effectuer la multiplication du multiplicande par le multiplicateur final.

Selon un mode de réalisation, le circuit comprend en outre une troisième entrée pour recevoir une donnée numérique pseudo aléatoire et le premier étage est configuré pour appliquer ou non l'encodage de Booth sur ladite chaîne en fonction de la valeur logique du bit de ladite donnée pseudo aléatoire coïncidant avec le début de ladite chaîne.

L'encodage de Booth peut être l'encodage Booth-1 ou l'encodage Booth-2.

Selon un mode de réalisation,
- le circuit est cadencé par un signal d'horloge,
- le multiplicande comprend une succession de mots de n bits, le multiplicateur comprend une succession de mots de k bits, par exemple k=8, la donnée numérique pseudo aléatoire comprend une succession de mots de j bits (j=k pour un encodage Booth-1 et j=k/2 pour un encodage Booth-2, par exemple),
- à chaque cycle du signal d'horloge, le premier étage est configuré pour recevoir un mot du multiplicateur initial, un mot de la donnée pseudo aléatoire, et délivrer un mot de j symboles (un symbole contient, du fait de l'encodage Booth, plusieurs bits) du multiplicateur final,
- l'étage de multiplication comprend j multiplexeurs respectivement commandés à partir des j symboles du mot du multiplicateur final.

Ces multiplexeurs sont configurés pour
- recevoir, au cours dudit cycle, sur leurs entrées de multiplexeurs, des mots d'entrée pris parmi le groupe formé par un mot nul, un mot du multiplicande, l'opposé de ce mot et des mots décalés à gauche du mot du multiplicande et dudit mot opposé, le double du mot du multiplicande, l'opposé de ce double et des mots décalés à gauche du double du mot du multiplicande et de l'opposé de ce double, et
- délivrer sur leur sortie respective, au cours du cycle du signal d'horloge, les produits partiels résultant des entrées de multiplexeurs respectivement sélectionnées.

Les sorties des multiplexeurs sont connectées aux entrées d'un étage additionneur de sauvegarde.

Le double du mot du multiplicande, l'opposé de ce double et les mots décalés à gauche du double du mot du multiplicande et de l'opposé de ce double sont utilisés dans l'encodage Booth-2 qui est particulièrement avantageux car le nombre de multiplexeurs est réduit.

D'autres avantages et caractéristiques de l'invention apparaîtront à l'examen de la description détaillée de modes de réalisation et de mise en oeuvre, nullement limitatifs, et des dessins annexés sur lesquels :
[Fig 1],
[Fig 2],
[Fig 3],
[Fig 4],
[Fig 5],
[Fig 6],
[Fig 7],

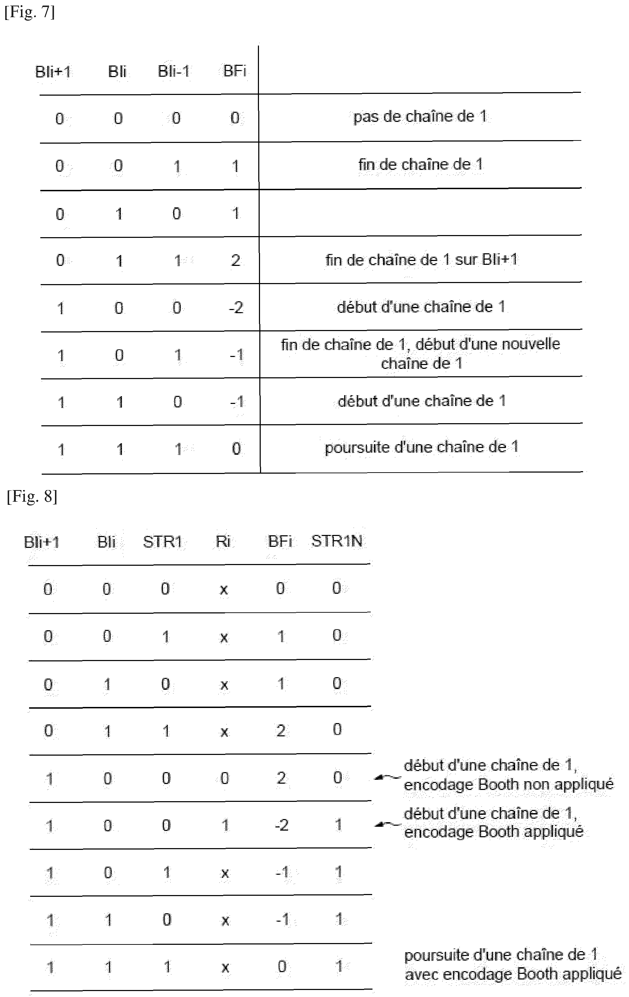

[Fig 8], et
[Fig 9],
illustrent schématiquement des modes de réalisation de l'invention.

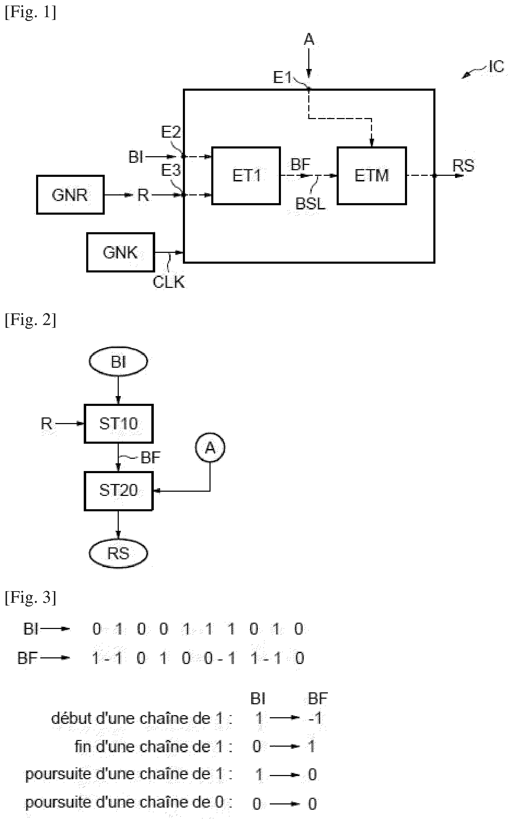

La figure 1 illustre un circuit électronique de multiplication IC, par exemple un circuit intégré, comprenant
- une première entrée E1 pour recevoir un multiplicande numérique A,
- une deuxième entrée pour recevoir un multiplicateur numérique initial BI comportant des 0 et des 1 logiques.

Le circuit comporte également un premier étage ET1 configuré pour recevoir le multiplicateur numérique initial BI et, pour au début de chaque chaîne d'au moins un 1 logique du multiplicateur, appliquer ou non un encodage de Booth sur ladite chaîne et délivrer un multiplicateur final BF.

Le circuit comporte en outre un étage de multiplication ETM configuré pour effectuer la multiplication du multiplicande A par le multiplicande BF et délivrer le résultat RS de la multiplication.

Comme on le verra plus en détail ci-après, l'étage de multiplication ETM comporte notamment un certain nombre de multiplexeurs commandés par un mot de sélection BSL obtenu à partir du multiplicateur final BF.

Par ailleurs, en pratique, le circuit est cadencé par un signal d'horloge CLK délivré par un générateur d'horloge, de structure classique et connue de l'homme du métier, et le multiplicande A comprend une succession de mots de n bits.

Le multiplicateur initial BI comprend une succession de mots de k bits, par exemple des octets (k = 8).

Le circuit comporte ici une troisième entrée E3 destinée à recevoir une donnée numérique pseudo aléatoire R délivrée par un générateur GNR de structure classique et connue par l'homme du métier.

La donnée numérique pseudo aléatoire R comprend une succession de mots de j bits (on verra plus en détail ci-après que j peut être égal à k ou à k/2 en fonction du type d'encodage Booth utilisé).

Et, à chaque cycle du signal d'horloge CLK, le premier étage ET1 est configuré pour recevoir un mot du multiplicateur initial BI, un mot de la donnée pseudo-aléatoire et pour délivrer un mot de j symboles du multiplicateur final BF à partir duquel seront déterminés des mots de sélection BSL.

La figure 2 illustre un mode de mise en oeuvre du procédé de multiplication.

Celui-ci comprend une réception du multiplicateur numérique initial BI et une réception de la donnée numérique pseudo-aléatoire R.

Une étape ST10 comprend ensuite un traitement du multiplicateur initial comportant au début de chaque chaîne d'au moins 1 logique du multiplicateur initial, une application ou non d'un encodage de Booth sur ladite chaîne de façon à délivrer le multiplicateur final BF.

Le procédé comprend également une réception du multiplicande numérique A, et dans une étape ST20, une multiplication du multiplicande A par le multiplicateur final BF de façon à délivrer le résultat RS.

On se réfère maintenant plus particulièrement aux figures 3 à 6 pour illustrer des modes de réalisation et de mise en oeuvre de l'invention mettant en oeuvre, de façon pseudo-aléatoire, un encodage de Booth du type Booth-1.

L'encodage de Booth-1 est bien connu de l'homme du métier.

On en rappelle les principes sur la figure 3.

Le mot BI illustré à titre d'exemple sur le haut de la figure 3 est encodé par l'encodage de Booth-1 pour devenir le mot BF illustré sous le mot BI.

Plus particulièrement, une chaîne de 1 comporte 1 ou plusieurs 1 consécutifs. Une telle chaîne se termine par un 0 et est éventuellement mais pas nécessairement encadrée par deux 0.

Lorsqu'un bit du mot BI est un 1 qui marque le début d'une chaîne de 1, ce 1 est codé en -1.

Lorsqu'un 0 du mot BI marque la fin d'une chaîne de 1, il est codé en 1.

Lorsqu'un 1 se situe dans une chaîne de 1, il est codé en 0.

Enfin, lorsqu'un 0 se situe dans une chaîne de 0, il est codé en 0.

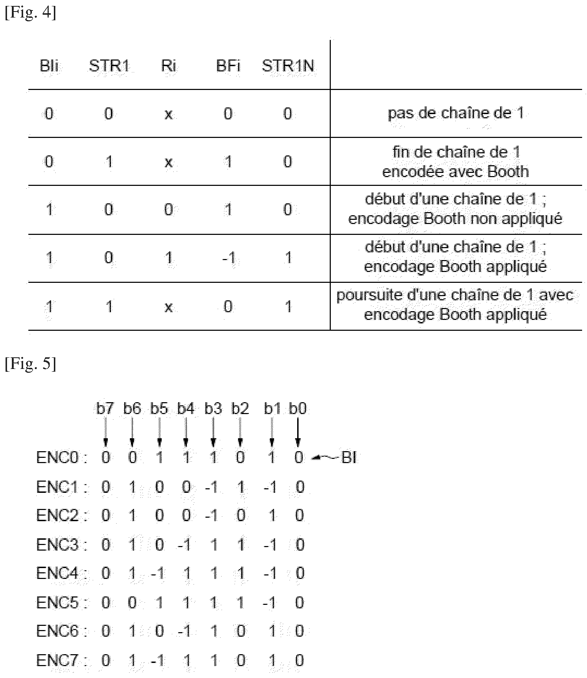

On se réfère maintenant à la figure 4 qui illustre plus particulièrement les cas où l'on applique ou non un encodage Booth-1 au début d'une chaîne de 1.

A cet égard, un bit STR1 est utilisé qui indique, selon sa valeur, avant le traitement d'un bit courant BIi du mot multiplicateur initial, si l'on est déjà en présence ou non d'une chaîne de 1 encodée avec un encodage Booth-1.

La référence STR1N désigne la nouvelle valeur du bit STR1 après traitement du bit BIi.

Ainsi, si le bit BIi vaut 0 et que le bit STR1 vaut 0 (par exemple) alors cela signifie que l'on n'est pas en présence d'une chaîne de 1.

Dans ce cas, quelle que soit la valeur du bit Ri de la donnée pseudo-aléatoire, le bit BFi est égal à 0 et la nouvelle valeur STR1N du bit STR1 est inchangée et reste égale à 0.

Si par contre le bit BIi est égal à 0 et que le bit STR1 a la valeur 1 alors cela signifie, quelle que soit la valeur du bit Ri, que ce bit BIi marque la fin d'une chaîne de 1 encodée avec l'encodage Booth-1.

En conséquence, le bit BFi prend la valeur 1 et la nouvelle valeur STR1N du bit STR1 vaut 0.

Si le bit BIi vaut 1 et que le bit STR1 vaut 0, alors cela signifie qu'on est au début d'une chaîne de 1.

Dans ce cas, la valeur du bit de la donnée pseudo-aléatoire Ri va déterminer si l'on applique ou non l'encodage de Booth sur la chaîne de 1.

Si par exemple Ri est égal à 0, alors on n'applique pas l'encodage de Booth sur la chaîne de 1.

Par conséquent le bit BFi conserve la même valeur que la valeur du bit BIi c'est-à-dire en l'espèce la valeur 1 et la nouvelle valeur STR1N du bit STR1 reste inchangée à 0.

Si par contre, comme illustré à la ligne suivante du tableau, la valeur du bit pseudo-aléatoire Ri vaut 1, alors on va appliquer l'encodage de Booth sur la chaîne de 1.

Par conséquent le bit BFi est encodé à -1 et la nouvelle valeur STR1N du bit STR1 vaut 1.

Enfin, comme illustré sur la dernière ligne du tableau, si le bit BIi vaut 1 et que le bit Str1 vaut 1 cela signifie que ce bit BIi se situe au sein d'une chaîne de 1 encodée avec l'encodage Booth-1.

Dans ce cas, quelle que soit la valeur du bit Ri, le bit BFi vaut 0 et la nouvelle valeur STR1N du bit STR1 reste inchangée et est égale à 1.

Les bits BIi, ainsi que le bit STR1N sont déterminés par les équations logiques suivantes :
- ABS(BFi)=BIi ou exclusif STR1
- SIGN(BFi)=BIi et (non STR1) et Ri
- STR1N = BIi et (STR1 ou Ri)

Dans ces équations, ABS désigne la valeur absolue et SIGN le signe

L'homme du métier saura réaliser un encodeur matériel à partir d'éléments logiques pour mettre en oeuvre les équations logiques ci-dessus.

La figure 5 illustre différentes combinaisons possibles d'encodage d'un octet BI comportant les bits b0 à b7.

La référence ENC0 désigne un mot BF identique au mot BI car aucun encodage de Booth n'est appliqué sur les chaînes de 1 du mot BI.

Dans l'encodage ENC1, on applique l'encodage de Booth sur toutes les chaînes de 1 du mot.

Dans l'encodage ENC2, on n'applique pas l'encodage de Booth sur la première chaîne de 1 (le bit b1) mais uniquement sur une deuxième chaîne de 1 qui débute au bit b3.

Dans l'encodage ENC3, on applique l'encodage de Booth sur la première chaîne de 1 (le bit b1), on n'applique pas l'encodage de Booth sur une deuxième chaîne de 1 (le bit b3) mais on l'applique sur une troisième chaîne de 1 qui débute au bit b4.

Dans l'encodage ENC4, on applique l'encodage de Booth sur la première chaîne de 1 (le bit b1), on n'applique pas l'encodage de Booth sur une deuxième chaîne de 1 (le bit b3) ni sur une troisième chaîne de 1 (le bit b4) mais on l'applique sur une quatrième chaîne de 1 (le bit b4).

Dans l'encodage ENC5, on applique l'encodage de Booth uniquement sur la première chaîne de 1 (le bit b1), et on n'applique pas l'encodage de Booth sur les autres chaînes de 1.

Dans l'encodage ENC6, on n'applique pas l'encodage de Booth sur la première chaîne de 1 (le bit b1) ni sur une deuxième chaîne de 1 (le bit b3) mais on l'applique sur une troisième chaîne de 1 (les bits b4 et b5).

Dans l'encodage ENC7, on n'applique pas l'encodage de Booth sur la première chaîne de 1 (le bit b1) ni sur une deuxième chaîne de 1 (les bits b3 et b4) mais on l'applique sur une troisième chaîne de 1 (le bit b5).

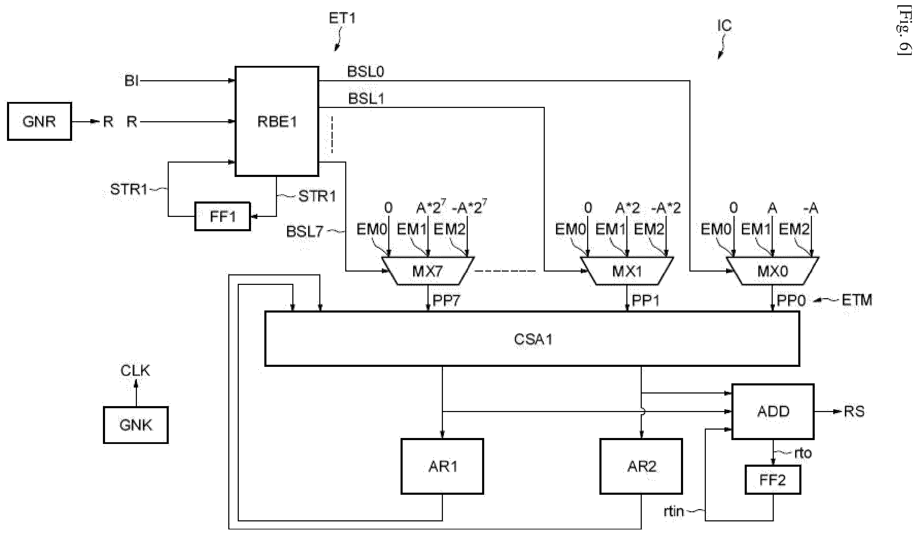

On se réfère maintenant plus particulièrement à la figure 6 pour décrire un mode de réalisation d'un circuit de multiplications selon l'invention permettant de mettre en oeuvre le procédé qui vient d'être décrit utilisant l'encodage Booth-1.

Le circuit IC comporte le générateur d'horloge GNK délivrant le signal d'horloge CLK ainsi que le générateur de nombres pseudo-aléatoires GNR délivrant la donnée numérique pseudo-aléatoire R.

Cette donnée pseudo aléatoire comporte une succession de mots de j bits, ici des octets (j=8).

Le multiplicateur initial BI comprend une succession de mots de k bits, ici des octets (k=8) et le multiplicande A comprend une succession de mots de n bits.

Le premier étage ET1 comporte un encodeur Booth-1 mettant en oeuvre les équations logiques mentionnées ci-dessus.

L'encodeur RBE1 est configuré pour, à chaque cycle du signal d'horloge CLK, recevoir un mot du multiplicateur initial BI, un mot de la donnée pseudo-aléatoire R et délivrer un mot de 8 symboles du multiplicateur final BF à partir duquel va être élaboré un mot de sélection de 8 symboles BSL0-BSL7 (un symbole comporte plusieurs bis) destiné à commander comme on va le voir plus en détail ci-dessous, j (j= 8 ici) multiplexeurs MX0-MX7 de l'étage de multiplication ETM.

Chaque multiplexeur MXi comporte trois entrées EM0, EM1, EM2, sélectionnables par le symbole correspondant BSLi.

L'entrée EM0 reçoit un mot nul.

L'entrée EM1 reçoit un mot du multiplicande ou bien un mot décalé à gauche de ce multiplicande.

Ainsi, le multiplexeur MX0 reçoit sur son entrée EM1 le mot de n bits du multiplicande A.

L'entrée EM1 du multiplexeur MX1 reçoit ce mot décalé à gauche de 1 bit et l'entrée EM1 du multiplexeur MX7 reçoit ce mot de n bits décalé à gauche de 7 bits.

L'entrée EM2 de chaque multiplexeur reçoit l'opposé du mot reçu sur l'entrée EM1.

Si le symbole de sélection BSLi vaut 0, l'entrée EM0 du multiplexeur correspondant est sélectionnée.

Si le symbole de sélection BSLi vaut 1, l'entrée EM1 est sélectionnée.

Si le symbole de sélection BSLi vaut 2, l'entrée EM2 est sélectionnée.

Et, au sein de l'encodeur de Booth RBE1, le symbole BSLi est élaboré par exemple de la façon suivante à partir de la valeur du bit BFi :
- BSLi = 0 si BFi =0
- BSLi =1 si BFi = 1 et
- BSLi = 2 si BFi = -1

Les multiplexeurs délivrent sur leur sortie respective, au cours du cycle du signal d'horloge CLK, les produits partiels PP0-PP7 résultant des entrées des multiplexeurs respectivement sélectionnés.

Les sorties des multiplexeurs sont connectées aux entrées d'un étage additionneur de sauvegarde CSA1 (Carry Save Adder).

La structure d'un tel étage additionneur de sauvegarde est bien connue de l'homme du métier et celui-ci pourra par exemple se référer à l'ouvrage de Parhami Behrooz, intitulé « Computer arithmetic : algorithms and hardware designs » (2nd édition), 2010, New York Oxford University Press.

L'étage de multiplication ETM comporte par ailleurs deux registres d'accumulation AR1 et AR2 rebouclés entre les sorties de l'additionneur de sauvegarde CSA1 et des entrées de cet additionneur de sauvegarde.

Un additionneur ADD reçoit les bits de poids faibles délivrés sur les sorties de l'additionneur de sauvegarde et délivre successivement les mots de résultat RS.

Une bascule FF2 du type Flip-Flop, reçoit sur son entrée la retenue rt0 délivrée en sortie de l'additionneur ADD et redélivre en entrée cette retenue rtin au cycle suivant.

Par ailleurs, une autre bascule du type Flip-Flop, FF1, est rebouclée sur une sortie de l'encodeur RBE1 et une entrée de cet encodeur.

Plus précisément, cette bascule FF1 est destinée à recevoir la valeur du bit STR1 qui a été élaborée à la fin de l'octet en cours pour le redélivrer lors du traitement de l'octet suivant.

En effet, par exemple une chaîne de 1 peut se situer à cheval entre deux octets consécutifs.

On se réfère maintenant plus particulièrement aux figures 7 à 9 pour décrire un mode de réalisation et de mise en oeuvre de l'invention utilisant un encodage de type Booth-2.

L'encodage classique Booth-2 est bien connu de l'homme du métier et sa table d'encodage est illustrée sur la figure 7.

Il s'agit là d'un encodage sur 2 bits. En d'autres termes, on encode le bit BIi ainsi que le bit suivant BIi+1 en un symbole BFi (qui comporte plusieurs bits). Le bit précédent BIi-1permet de déterminer si une chaîne de 1 est en cours.

Les significations des lignes principales de l'encodage Booth-2 sont mentionnées sur la partie droite de la figure 7 en regard des lignes correspondantes.

La figure 8 illustre la table d'encodage Booth-2 modifiée pour faire intervenir le bit de la donnée pseudo-aléatoire Ri.

Là encore, comme dans le mode de réalisation précédent utilisant l'encodage Booth-1, on décide, en fonction de la valeur logique du bit Ri si, au début d'une chaîne de 1, on encode ou non cette chaîne de 1 avec l'encodage Booth-2.

Ainsi, comme dans le cas précédent, si le bit Ri vaut 0 (par exemple), alors l'encodage Booth n'est pas appliqué sur cette chaîne de 1 tandis que si le bit Ri vaut 1, alors l'encodage de Booth est appliqué sur la chaîne de 1 qui va débuter.

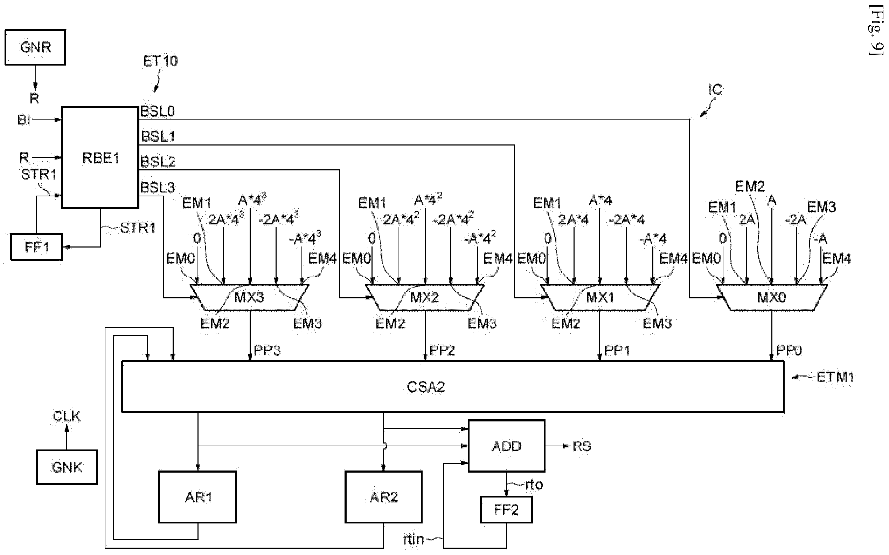

La figure 9 illustre un mode de réalisation d'un circuit IC mettant en oeuvre l'encodage de Booth-2 avec utilisation de la donnée pseudo-aléatoire R.

La donnée pseudo-aléatoire R comporte ici des mots de 4 bits (j = 4).

Les mots du multiplicateur initial sont là encore des octets et les mots du multiplicande sont des mots de n bits.

L'homme du métier saura réaliser matériellement l'encodeur RBE2 mettant en oeuvre la table d'encodage de la figure 8, et ce à l'aide d'éléments logiques.

Comme pour le mode de réalisation de la figure 6, une bascule FF1 est prévue de façon à stocker la valeur du bit STR1 déterminé à la fin de l'octet courant pour le réinjecter dans l'encodeur RBE2 au début de l'octet suivant.

A la différence du mode de réalisation de la figure 6, l'étage de multiplication ETM1 comporte ici 4 multiplexeurs MX0-MX3.

Chaque multiplexeur comporte 5 entrées EM0-EM4.

L'entrée EM0 reçoit un mot nul.

L'entrée EM2 reçoit le mot du multiplicande A ou bien ce mot décalé sur la gauche.

Ainsi, l'entrée EM2 du multiplexeur MX0 reçoit le mot du multiplicande A.

L'entrée EM2 du multiplexeur MX1 reçoit ce mot décalé de 2 bits sur la gauche.

L'entrée EM2 du multiplexeur MX2 reçoit ce mot décalé de 4 bits sur la gauche.

L'entrée EM2 du multiplexeur MX3 reçoit le mot du multiplicande décalé de 6 bits sur la gauche.

L'entrée EM1 de chaque multiplexeur reçoit le double du mot du multiplicande éventuellement décalé sur la gauche de la même façon que pour les entrées EM1 .

L'entrée EM3 de chaque multiplexeur reçoit l'opposé du mot reçu sur l'entrée EM1.

L'entrée EM4 de chaque multiplexeur reçoit l'opposé de chaque mot reçu sur l'entrée EM2.

Les multiplexeurs sont commandés par un mot de sélection de 4 symboles BSL0-BSL3.

Chaque symbole BSLi peut prendre les valeurs 0, 1, 2, 3, 4 de façon à commander les entrées EM0, EM1, EM2, EM3, EM4 respectivement.

Si le bit BFi vaut 0, alors BSLi vaut 0.

Si BFi vaut 2, alors BSLi vaut 1.

Si BFi vaut 1, alors BSLi vaut 2.

Si BFi vaut -2, alors BSLi vaut 3.

Et si BFi vaut -1 alors BSLi vaut 4.

Les 4 produits partiels PP0-PP3 sont délivrés en entrée d'un étage additionneur de sauvegarde CSA2 de structure classique.

Le reste de l'étage de multiplication ETM1 est analogue à ce qui a été décrit en référence à la figure 6.

## Revendications

1. Procédé de multiplication mis en oeuvre par un circuit électronique de multiplication, comprenant une réception d'un multiplicande numérique (A), une réception d'un multiplicateur numérique initial comportant des 0 et des 1 logiques, un traitement du multiplicateur initial (BI) comportant au début de chaque chaîne d'au moins un 1 logique du multiplicateur initial, une application ou non d'un encodage de Booth sur ladite chaîne de façon à délivrer un multiplicateur final (BF), et une multiplication du multiplicande (A) par le multiplicateur final (BF).

2. Procédé selon la revendication 1, comprenant en outre une réception d'une donnée numérique pseudo aléatoire (R) et l'application ou non d'un encodage de Booth sur ladite chaîne dépend de la valeur logique du bit (Ri) de ladite donnée pseudo aléatoire coïncidant avec le début de ladite chaîne.

3. Procédé selon l'une des revendications précédentes, dans lequel l'encodage de Booth est l'encodage Booth-1.

4. Procédé selon l'une des revendications 1 ou 2, dans lequel l'encodage de Booth est l'encodage Booth-2.

5. Circuit électronique de multiplication, comprenant une première entrée pour recevoir un multiplicande numérique (A), une deuxième entrée pour recevoir un multiplicateur numérique initial (BI) comportant des 0 et des 1 logiques, un premier étage (ET1) configuré pour recevoir le multiplicateur numérique initial, et pour au début de chaque chaîne d'au moins un 1 logique du multiplicateur, appliquer ou non un encodage de Booth sur ladite chaîne et délivrer un multiplicateur final, et un étage de multiplication (ETM) configuré pour effectuer la multiplication du multiplicande par le multiplicateur final.

6. Circuit selon la revendication 5, comprenant en outre une troisième entrée pour recevoir une donnée numérique pseudo aléatoire (R) et le premier étage est configuré pour appliquer ou non l'encodage de Booth sur ladite chaîne en fonction de la valeur logique du bit de ladite donnée pseudo aléatoire coïncidant avec le début de ladite chaîne.

7. Circuit selon la revendication 5 ou 6, dans lequel l'encodage de Booth est l'encodage Booth-1.

8. Circuit selon la revendication 5 ou 6, dans lequel l'encodage de Booth est l'encodage Booth-2.

9. Circuit selon la revendication 7 ou 8 prise en combinaison avec la revendication 6, cadencé par un signal d'horloge (CLK) et dans lequel
- le multiplicande (A) comprend une succession de mots de n bits, le multiplicateur initial (BI) comprend une succession de mots de k bits, la donnée numérique pseudo aléatoire (R) comprend une succession de mots de j bits, et à chaque cycle du signal d'horloge, le premier étage est configuré pour recevoir un mot du multiplicateur initial, un mot de la donnée pseudo aléatoire, et délivrer un mot de j symboles du multiplicateur final,
- l'étage de multiplication comprend j multiplexeurs respectivement commandés à partir des j symboles du mot du multiplicateur final et configurés pour recevoir, au cours dudit cycle, sur leurs entrées de multiplexeurs, des mots d'entrée pris parmi le groupe formé par un mot nul, un mot du multiplicande, l'opposé de ce mot, des mots décalés à gauche du mot du multiplicande et dudit mot opposé, le double du mot du multiplicande, l'opposé de ce double, des mots décalés à gauche du double du mot du multiplicande et de l'opposé de ce double et pour délivrer sur leur sortie respective, au cours du cycle du signal d'horloge, les produits partiels résultant des entrées de multiplexeurs respectivement sélectionnées,
- les sorties des multiplexeurs étant connectées aux entrées d'un étage additionneur de sauvegarde.
